# EUROPEAN PATENT SPECIFICATION

(11) **EP 2 133 139 B1**
(45) Date of publication and mention of the grant of the patent: **18.04.2012**
(21) Application number: 09161783.7
(22) Date of filing: 03.06.2009
(51) Int. Cl.: B01F 13/08, A47J 43/046, A47J 27/00, B01F 7/00

(54) **Cooker comprising a magnetic stirrer**
Kochgerät mit magnetischem Rührer
Appareil de cuisson comportant un agitateur magnétique

(30) Priority: 09.06.2008 TR 200804172
(43) Date of publication of application: 16.12.2009
(73) Proprietor: Vestel Beyaz Esya Sanayi ve Ticaret A.S., 45030 Manisa (TR)
(72) Inventor: Turan, Halil, 45030, Manisa (TR); Tosun, Mehmet Kerem, 35150, Izmir (TR); Akdal, Mustafa, 45030 Manisa (TR); Esmeroglu, Abdullah, 45030, Manisa (TR)
(74) Representative: Cayli, Hülya

(56) References cited:
- DE-A1- 2 144 372
- DE-A1- 3 342 249
- DE-A1- 10 232 886
- DE-A1-102006 052 475
- US-A- 5 549 382
- US-A1- 2004 114 462
- US-A1- 2006 146 645

## Description

### Field of the Invention

This invention is related to magnetic mixers which stir the food without the need of a user to stir the food while cooking liquid foods such as soup and pudding and the cookers in which these mixers are used.

### Background of the Invention

Liquid foods such as soup and pudding need to be constantly stirred while being cooked. The need of the cook to constantly stir the food causes waste of time. Besides, being subjected to heat is an undesirable condition. Therefore magnetic stirring systems have been developed instead of using stirring tools such as spoons and scoops. Thus wasting the time of the cook is prevented and a homogenous stirring is obtained.

In the known state of the art, patent application US5549382 discloses an apparatus and a method for automatically stirring food-stuffs in a kitchen environment. In document US5549382, a stove top comprising a plurality of cooking locations, an agitator device to stir food-stuffs, a driver means for driving said agitator device, a top surface to support a plurality of cooking vessels and a heating means for heating in operable association with each of the cooking locations is disclosed. Said driver means comprises an array of electromagnets placed under cooking locations. Said electromagnets are in connection with an actuator which sequentially steps a current through electromagnets. Thus, said agitator device is pulled to the sequentially energized electromagnets, wherein a stepping action is observed on the agitator device.

In another patent application DE102006052475, a cooker with automatic stirrer which has a heating unit including a heatproof support provided with an outer side/cooking side and a magnet drive is described. The heatproof support is formed to allow a transfer of heat energy from an induction heating device in a direction of a cooking side, where the support is made of a material from a group consisting of a metal, metal alloy, glass, ceramic, glass ceramic and ceran. The magnet drive is formed for movement of a magnet-sensitive unit, and the heating device is arranged for operation with gas and/or electricity, where heating power of the heating device is controllable. By the magnet drive integrated in the hot plate, the magnetic stirring member moves and stirs the food-stuffs. In patent application DE102006052475 magnetic field lines pass through the air. Since the resistance of air is high, efficiency to stir food-stuffs will low.

In the known state of the art, the system disclosed in patent application US2006146645; the stirring operation is performed by turning an electromagnet placed on a circular panel placed under the cooking plate by the help of a motor and a belt. When the motor turns, the belt causes the circular panel to start turning. Thus the electromagnet on the circular panel starts turning and creates a rotating magnetic field. This causes the mixing tool in the cooking pot to move. However, since the turning motion of the electromagnet is driven by a motor and belt mechanism, the noise of the motor may disturb the user and using a motor increases the costs.

In the patent application AU1752900 related to the known state of the art, the cooking operation in a microwave oven is performed by placing fixed magnets on a circular panel placed under the inside bottom surface of the oven and by turning this panel by a motor and gear system. When the motor turns, the circular panel starts turning by the help of the gears. Thus the fixed magnet on the circular panel turns and creates a rotating magnetic field. This causes the mixing tool in the cooking pot to move. Also a disturbing noise is created in this patent application due to the use of a system consisting of a motor and gears. The motor and the gear system that are used cause the invention to be more complicated and expensive. Moreover, this invention of the known state of the art is used for microwave ovens.

In the patent application W09305345 related to the known state of the art, the mixing operation in the microwave ovens is performed by attaching a U shaped magnet onto the shaft of the motor and then by turning this magnet under the cooking pot. When the motor turns, the magnet attached to the shaft starts turning. Thus a rotating magnetic field is created. This causes the mixing tool in the cooking pot to move.

In the patent application GB1216736 related to the known state of the art, an electronically controlled mixer is disclosed. The power is supplied to the electronic control unit by a complex motorized system. This both increases the costs and provides a complex system.

### Brief Description of the Invention

The cooker according to the current invention comprises a pot in which the liquid content foods are cooked; cooker grids made of a magnetic material placed on top of the upper cooking plate on which the cooking pot is placed; a burner which provides imprecisely controlled heat for cooking the foods; a control unit connected to an electric supply line; at least two magnetic components wherein a pole of each component is in connection to a grid placed on the upper cooking plate powered by the control unit with cables; and a mixing tool with magnetic properties located in the cooking pot. By sequential energizing of the magnetic components, the mixing tool in the cooking pot is pulled by the magnetic component and thus moves.

In an alternative embodiment of the invention, coiled fixed magnets are used as the magnetic components, the free ends of the coils are connected to the control unit and the magnetic power of the magnets are turned off by energizing the coils by the control unit and the de-energized coils pull the mixer. Thus, by sequentially energizing of the coils, the mixing tool moves in the cooking pot.

### The Objective of the Invention

The object of the invention is to provide a homogeneous stirring of the liquid foods during cooking without intervention of the user.

Another object of the invention is to mix the liquid in a pot by moving a mixing tool in a cooking pot placed on a cooker by using magnetic components located in a cooker.

### Brief Description of the Figures

An exemplary cooker of the present invention is illustrated in the annexed drawings in which;
Figure 1 is a schematic side view of the cooker.
Figure 2 is an illustration of how the magnetic components are located.
Figure 3 is an exemplary schematic view of how the cooker operates.
Figure 4 is a side view of an alternative embodiment of the invention.
Figure 5 is a side view of a sample mixer.
Figure 6 shows the plan view of the mixing tool and the magnetic components in an alternative embodiment of the invention.

The parts in the figures are given individual reference numbers and the corresponding parts are given below.
Cooker (A)
Cooking pot (1)
Mixing tool (2)
Cooker grids (3)
Burner (4)
Cooker upper plate (5)
Magnetic component (6)
Control unit (7)
Fixed magnet (8)
Cable (11)
Coil (12)

### Detailed Description of the Invention

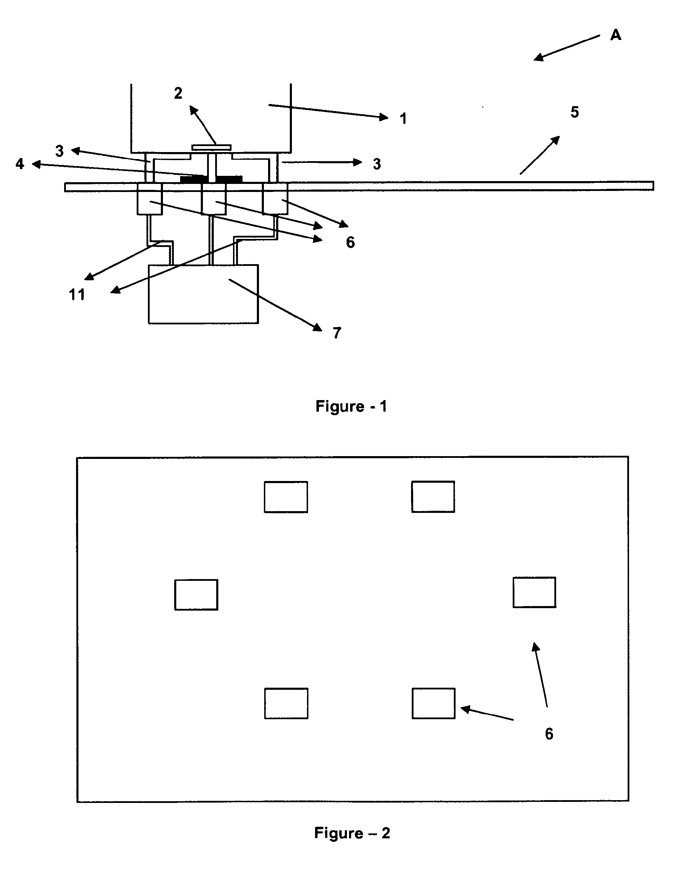

The cooker (A) of which a schematic side view is given in Figure 1 comprises a pot (1) in which the liquid content foods are cooked; at least one cooker grid (3) made of a magnetic material placed on top of the upper cooking plate (5) on which the cooking pot (1) is placed; gas burner (4) which provides controlled heat to the cooking pot (1) for cooking the foods; the control unit (7) connected to an electric supply line; at least two magnetic components (6) placed on the upper cooking plate (5) powered by the control unit (7) with cables (11) wherein a pole of each component (6) is in connection to a grid (3); and a mixing tool (2) with magnetic properties located in the cooking pot.

By sequential energizing of the magnetic components (6) in the cooker (1), the mixing tool (2) in the cooking pot (1) is pulled by the magnetic component and thus moves in the fluid.

In a sample cooker (A) showed in Figure 1, the control unit (7) is placed under the upper plate (5) of the cooker (A). Likewise, the magnetic components (6) are placed under the cooker upper plate (5) such that they are under the cooking pot (1). Also, in order to compress the magnetic field lines created by each magnetic component (6) through the grids (3) under cooking pot (1), a pole of each component (6) can be connected to a grid (3). Thus, each grid (3) is made of a magnetic material.

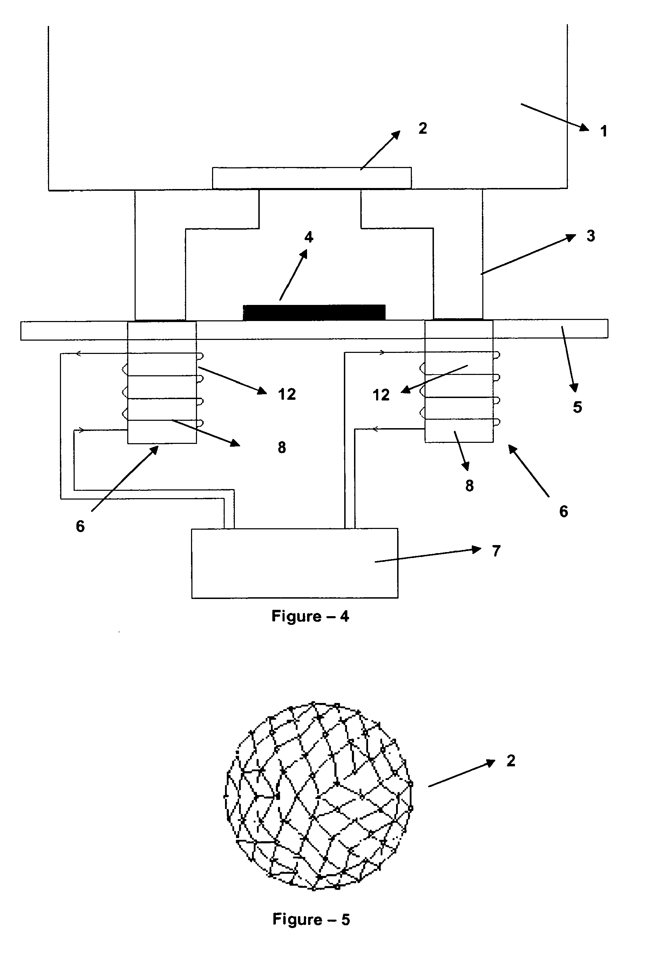

The mixing tool (2) continuously rotates in the cooked liquid by periodically energizing the magnetic components (6), creating magnetic poles in these magnetic components (6) as a result of this periodic change and by periodically changing these magnetic poles. The magnetic property of the mixing tool (2) causes it to be pulled towards the magnetic field created by the components (6). The mixing tool (2) changes location again by the changing magnetic field and this cycle moves the mixing tool (2) and causes it to mix the cooked liquid homogenously. Electromagnets or coiled (12) fixed magnets (8) showed in Figure 4 can be used as the magnetic components (6).

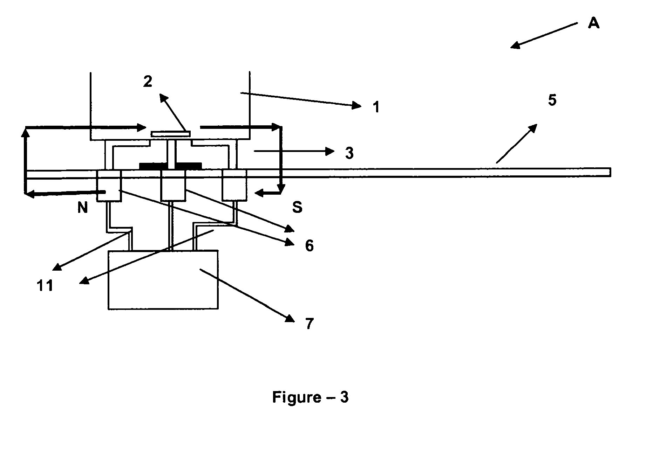

Figure 3 shows a schematic view of the operation of a sample cooker (A). The user puts the cooking pot (1) on the cooker grid (3) placed on the cooker upper plate (5) and places the mixing tool (2) inside the cooking pot (1). The control unit (7) is turned on by pressing the mix button on the cooker. The control unit (7) which is connected to the power line transfers the electrical current to magnetic components (6) located separately by using cables (11) and simultaneously the electrical energy transforms into magnetic energy creating magnetic field around the components (6). The magnetic field lines of the components (6) follow a route from N pole towards S pole. Magnetic field lines created by the components (6) exit from N pole, pass through cooker upper plate (5), cooker grids (3) and cooking pot (1) and affect the mixing tool (2) in the cooking pot (1). Similarly, the magnetic field lines exiting from the mixing tool (2) pass through cooking pot (1), grids (3) and cooker upper plate (5) in order and reach the S pole of the electromagnet (6). Thus, the magnetic component (6) around which a magnetic field is created pulls the mixing tool (2) towards itself. The device (2) moves towards different directions by creating different magnetic fields by the components (6) each time.

Figure 2 shows a plan view of a sample embodiment about locating the components (6). In this sample embodiment, 6 electromagnets (6) are placed under the cooker upper plate (5) such that they form a circle. Electrical current is applied to each of the components (6) placed as described above in a sequential order or these are magnetized differently, therefore the mixing tool (2) starts rotating in the cooking pot (1). The mixing tool (2) can be made to follow different paths by changing the arrangement of the electromagnets (6) or by changing the energizing sequence applied by the control unit (7).

The mixing tool (2) is made of a magnetic material (preferably a material having a high permeability). The mixing tool (2) can move easier in the pot (1) since it can be pulled easier by the components (6). For example, the mixing tool (2) can be made in a sphere form to provide easier rotation and movement as shown in Figure 5. For the liquid food to be mixed better while the sphere is rotating, the sphere can be manufactured with holes on it.

Alternatively, the mixing tool (2) can be manufactured in different forms such as spiral, triangular or cylindrical. Moreover, the dimensions of the mixing tool (2) can change depending on the amount and viscosity of the food to be mixed. The mixing tool (2) can be coated with various materials such as polymers, ceramics, glass or wood. By this way, the undesired high-pitched sounds that can be created by the contact of the mixing tool (2) with the surface of the pot (1) can be prevented. Additionally, depending on the selected material, the mixing speed can be increased as well as minimizing the scratching of the pot surface (1) by the mixing tool (2) (alternatively, the metal coated mixers (2) can be used depending on the need).

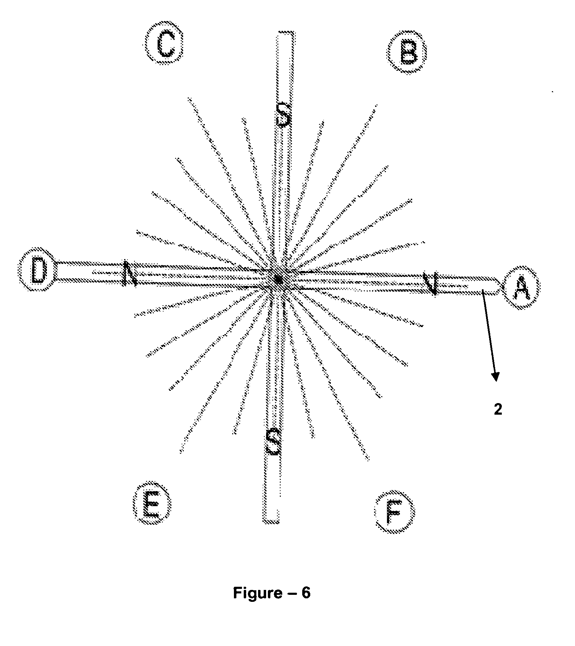

In another embodiment of the invention described above, the mixing tool (2) has been shaped like a cross as seen in Figure 6. The magnetic components (6) referenced as A, B, C, D, E and F are magnetized by being energized by the control unit (7). The poles of these components (6) are changed very frequently and each change on the poles of the components (6) creates a magnetic field on the device (2), thus causing it to rotate. By magnetizing the components (6) differently, the mixing tool (2) in the cooking pot (1) makes a continuous full rotation. Moreover, the magnetic components (6) referenced as A, B, C, D, E and F increase the rotating force by the aid of the force which pulls the ends of the mixing tool (2) while approaching and pushes while going away. Thus, it gets easier to mix the foods having high density.

Another sample embodiment of the invention is shown in Figure 4. In this embodiment, by using coiled (12) fixed magnets (8) as magnetic components (6), while the magnetic field created by the fixed magnet (8) on which the coil (12) is wound is weakened by the reverse magnetic field of the coil (12), the magnets (8) on which the de-energized coils (12) are wound pull the mixing tool (2) in the cooking pot (1) and by continuously energizing different magnets (8) the mixing tool (2) is moved. The direction of the magnetic field created during energizing of the coils (12) is arranged such that it will reduce or destroy the effect of the magnetic field created by the fixed magnet (8).

The circumference of the said magnetic components (6) can be coated with a paramagnetic material. Thus, a more powerful pulling force can be obtained by making the magnetic field lines more frequent between the poles of such coated components (6) and by increasing the magnetic pulling force. Due to this obtained more powerful pulling force, the rotation of the mixing tool (2) in the cooking pot (2) becomes faster and more effective and it gets easier to mix the foods having a high density.

The invention can be implemented on each of the burners (4) as well as it can be implemented on a single burner (4). Thus, it becomes possible to mix more than one food at the same time. Said burners (4) can be gas or electrical burners.

The user can start or stop the mixing feature of the cooker (A) with a start-stop knob or button. The user can also choose the mixing time and energizing frequency of the magnetic components (6) with a timer and speed setting arrangement connected to the control unit (7) and by this way the user can determine the suitable time and speed for the mixing.

## Claims

1. A cooker (A) that comprises a pot (1) in which the liquid content foods are cooked; at least one cooker grid (3) made of a magnetic material placed on top of the cooker upper plate (5) on which the cooking pot (1) is placed; a burner (4) which provides controlled heat to the cooking pot (1) for cooking the foods; and a mixing tool (2) having magnetic properties located in the cooking pot (1) **characterized in that** it comprises a control unit (7) connected to an electric supply line; at least two magnetic components (6) placed on the cooker upper plate (5) periodically energized by the control unit with using cables where a pole of each of the magnetic components (6) is in connection with said grid (3) and which moves the said mixing tool (2) by the magnetic field created within.

2. A cooker (A) according to Claim 1 **characterized in that** at least one magnetic component (6) is an electromagnet.

3. A cooker (A) according to Claim 1 **characterized in that** at least one magnetic component is a fixed magnet (8) on which a coil (12) is wound.

4. A cooker (A) according to Claim 1 **characterized in that** at least one magnetic component (6) is coated with a paramagnetic material.

5. A cooker (A) according to Claim 1 **characterized in that** the magnetic components (6) are located under the cooker upper plate (5).

6. A cooker (A) according to Claim 5 **characterized in that** magnetic components (6) are located under the cooking pot (1).

7. A cooker (A) according to Claim 1 **characterized in that** the mixing tool (2) is shaped as a cross.

8. A cooker (A) according to Claim 1 **characterized in that** the mixing tool (2) has a spherical shape.

9. A cooker (A) according to Claim 8 **characterized in that** the mixing tool (2) has a perforated form.

10. A cooker (A) according to Claim 1 **characterized in that** the mixing tool (2) is polymer coated.

11. A cooker (A) according to Claim 1 **characterized in that** the mixing tool (2) is ceramic coated.

12. A cooker (A) according to Claim 1 **characterized In that** the mixing tool (2) is glass coated.

13. A cooker (A) according to Claim 1 **characterized in that** the mixing tool (2) is wood coated.

14. A cooker (A) according to Claim 1 **characterized in that** the mixing tool (2) is metal coated.

15. A cooker (A) according to Claim 1 **characterized in that** the control unit (7) has a start-stop switch setting its operation.

16. A cooker (A) according to Claim 1 **characterized in that** it comprises a timer mechanism in connection with the control unit (7).

17. A cooker (A) according to Claim 1 **characterized in that** it comprises a speed adjustment mechanism in connection with the control unit (7) which determines the energizing frequency of the magnetic components (6).

18. A cooker (A) according to Claim 1 **characterized in that** the cooker burner (4) is a gas burner.

19. A cooker (A) according to Claim 1 **characterized in that** the cooker burner (4) is an electrical burner.

20. A cooker (A) according to Claim 1 **characterized in that** the magnetic components (6) are magnetized differently or same.

## Patentansprüche

1. Kochgerät (A), umfassend einen Topf (1), in dem Flüssigkeit enthaltende Lebensmittel gekocht werden, wenigstens ein Kochgerätgitter (3) bestehend aus einem magnetischen Material angeordnet oberhalb der Kochgerätoberplatte (5), auf der der Kochtopf (1) angeordnet ist, einen Brenner (4), der kontrollierte Hitze für den Kochtopf (1) zum Kochen der Nahrungsmittel liefert, sowie ein Mischwerkzeug (2) mit magnetischen Eigenschaften angeordnet in dem Kochtopf (1), **dadurch gekennzeichnet, dass** das Kochgerät umfasst eine Steuerungseinheit (7) verbunden mit einer elektrischen Versorgungsleitung und wenigstens zwei magnetische Komponenten (6) angeordnet an der Kochgerätoberplatte (5) und periodisch energetisiert durch die Steuerungseinheit unter Verwendung von Kabeln, wobei ein Pol jeder der magnetischen Komponenten (6) mit dem Gitter (3) in Verbindung steht, was das Mischwerkzeug (2) durch das damit erzeugte magnetische Feld bewegt.

2. Kochgerät (A) nach Anspruch 1, **dadurch gekennzeichnet, dass** wenigstens eine magnetische Komponente (6) ein Elektromagnet ist.

3. Kochgerät (A) nach Anspruch 1, **dadurch gekennzeichnet, dass** wenigstens eine magnetische Komponente ein fester Magnet (8) mit einer darum gewickelten Spule ist.

4. Kochgerät (A) nach Anspruch 1, **dadurch gekennzeichnet, dass** wenigstens eine magnetische Komponente (6) mit einem paramagnetischen Material beschichtet ist.

5. Kochgerät (A) nach Anspruch 1, **dadurch gekennzeichnet, dass** die magnetischen Komponenten (6) unter der Kochgerätoberplatte (5) angeordnet sind.

6. Kochgerät (A) nach Anspruch 5, **dadurch gekennzeichnet, dass** die magnetischen Komponenten (6) unter dem Kochtopf (1) angeordnet sind.

7. Kochgerät (A) nach Anspruch 1, **dadurch gekennzeichnet, dass** das Mischwerkzeug (2) kreuzförmig geformt ist.

8. Kochgerät (A) nach Anspruch 1, **dadurch gekennzeichnet, dass** das Mischwerkzeug (2) eine kugelartige Gestalt besitzt.

9. Kochgerät (A) nach Anspruch 8, **dadurch gekennzeichnet, dass** das Mischwerkzeug (2) eine perforierte Form besitzt.

10. Kochgerät (A) nach Anspruch 1, **dadurch gekennzeichnet, dass** das Mischwerkzeug (2) polymerbeschichtet ist.

11. Kochgerät (A) nach Anspruch 1, **dadurch gekennzeichnet, dass** das Mischwerkzeug (2) keramikbeschichtet ist.

12. Kochgerät (A) nach Anspruch 1, **dadurch gekennzeichnet, dass** das Mischwerkzeug (2) glasbeschichtet ist.

13. Kochgerät (A) nach Anspruch 1, **dadurch gekennzeichnet, dass** das Mischwerkzeug (2) holzbeschichtet ist.

14. Kochgerät (A) nach Anspruch 1, **dadurch gekennzeichnet, dass** das Mischwerkzeug (2) metallbeschichtet ist.

15. Kochgerät (A) nach Anspruch 1, **dadurch gekennzeichnet, dass** die Steuerungseinheit (7) einen Start-Stoppschalter besitzt, der deren Betrieb einstellt.

16. Kochgerät (A) nach Anspruch 1, **dadurch gekennzeichnet, dass** es einen Timer-Mechanismus in Verbindung mit der Steuerungseinheit (7) umfasst.

17. Kochgerät (A) nach Anspruch 1, **dadurch gekennzeichnet, dass** es einen Geschwindigkeitseinstellungsmechanismus in Verbindung mit der Steuerungseinheit (7) umfasst, die die Energetisierungsfrequenz der magnetischen Komponenten (6) bestimmt.

18. Kochgerät (A) nach Anspruch 1, **dadurch gekennzeichnet, dass** der Kochgerätbrenner (4) ein Gasbrenner ist.

19. Kochgerät (A) nach Anspruch 1, **dadurch gekennzeichnet, dass** der Kochgerätbrenner (4) ein elektrischer Brenner ist.

20. Kochgerät (A) nach Anspruch 1, **dadurch gekennzeichnet, dass** die magnetischen Komponenten (6) unterschiedlich oder gleich magnetisiert sind.

## Revendications

1. Appareil de cuisson (A) comprenant un récipient (1) dans lequel les aliments à contenu liquide sont cuits ; au moins une grille de cuisson (3) constituée d'un matériau magnétique placée au-dessus de la plaque supérieure de l'appareil de cuisson (5) sur laquelle le récipient de cuisson (1) est placé ; un brûleur (4) qui fournit de la chaleur régulée au récipient de cuisson (1) afin de cuire les aliments ; et un mélangeur (2) ayant de propriétés magnétiques situé dans le récipient de cuisson (1) **caractérisé en ce qu'**il comprend une unité de commande (7) connectée à une ligne d'alimentation électrique ; au moins deux composants magnétiques (6) placés sur la plaque supérieure de l'appareil de cuisson (5) périodiquement alimentés par l'unité de commande (7) à l'aide de câbles où un pôle de chacun des composants magnétiques (6) est connecté à ladite grille (3) et qui déplace ledit mélangeur (2) grâce au champ magnétique créé à l'intérieur.

2. Appareil de cuisson (A) selon la revendication 1, **caractérisé en ce qu'**au moins un composant magnétique (6) est un électroaimant.

3. Appareil de cuisson (A) selon la revendication 1, **caractérisé en ce qu'**au moins un composant magnétique est un aimant fixe (8) sur lequel une bobine (12) est enroulée.

4. Appareil de cuisson (A) selon la revendication 1 **caractérisé en ce qu'**au moins un composant magnétique (6) est revêtu d'un matériau paramagnétique.

5. Appareil de cuisson (A) selon la revendication 1 **caractérisé en ce que** les composants magnétiques (6) sont situés sous la plaque supérieure de l'appareil de cuisson (5).

6. Appareil de cuisson (A) selon la revendication 5 **caractérisé en ce que** des composants magnétiques (6) sont situés sous le récipient de cuisson (1).

7. Appareil de cuisson (A) selon la revendication 1, **caractérisé en ce que** le mélangeur (2) a une forme de croix.

8. Appareil de cuisson (A) selon la revendication 1 **caractérisé en ce que** le mélangeur (2) a une forme sphérique.

9. Appareil de cuisson (A) selon la revendication 8, **caractérisé en ce que** le mélangeur (2) a une forme perforée.

10. Appareil de cuisson (A) selon la revendication 1, **caractérisé en ce que** le mélangeur (2) est revêtu de polymère.

11. Appareil de cuisson (A) selon la revendication 1, **caractérisé en ce que** le mélangeur (2) est revêtu de céramique.

12. Appareil de cuisson (A) selon la revendication 1, **caractérisé en ce que** le mélangeur (2) est revêtu de verre.

13. Appareil de cuisson (A) selon la revendication 1, **caractérisé en ce que** le mélangeur (2) est revêtu de bois.

14. Appareil de cuisson (A) selon la revendication 1, **caractérisé en ce que** le mélangeur (2) est revêtu de métal.

15. Appareil de cuisson (A) selon la revendication 1, **caractérisé en ce que** l'unité de commande (7) comprend un interrupteur marche/arrêt lançant son fonctionnement.

16. Appareil de cuisson (A) selon la revendication (1), **caractérisé en ce qu'**il comprend un mécanisme de minuterie connecté à l'unité de commande (7).

17. Appareil de cuisson (A) selon la revendication 1, **caractérisé en ce qu'**il comprend un mécanisme d'ajustement de vitesse connecté à l'unité de commande (7) qui détermine la fréquence d'alimentation des composants magnétiques (6).

18. Appareil de cuisson (A) selon la revendication 1, **caractérisé en ce que** le brûleur de l'appareil de cuisson (4) est un brûleur à gaz.

19. Appareil de cuisson (A) selon la revendication 1, **caractérisé en ce que** le brûleur de l'appareil de cuisson (4) est un brûleur électrique.

20. Appareil de cuisson (A) selon la revendication 1, **caractérisé en ce que** les composants magnétiques (6) sont magnétisés différemment ou de la même façon.
